# EUROPÄISCHE PATENTSCHRIFT

(11) **EP 3 052 831 B1**
(45) Veröffentlichungstag und Bekanntmachung des Hinweises auf die Patenterteilung: **23.12.2020**
(21) Anmeldenummer: 14777296.6
(22) Anmeldetag: 26.09.2014
(51) Int. Cl.: F16D 57/04, B60T 1/087

(54) **HYDRAULIKSYSTEM FÜR EINE HYDRODYNAMISCHE MASCHINE**
HYDRAULIC SYSTEM FOR A HYDRODYNAMIC MACHINE
SYSTÈME HYDRAULIQUE POUR MACHINE HYDRODYNAMIQUE

(30) Priorität: 30.09.2013 DE 102013219786
(43) Veröffentlichungstag der Anmeldung: 10.08.2016
(73) Patentinhaber: Voith Patent GmbH, 89522 Heidenheim (DE)
(72) Erfinder: SCHLOSSER, Markus, 73479 Ellwangen (DE); LÜHRS, Thorsten, 74592 Kirchberg (DE); ROMMEL, Matthias, 73529 Schwäbisch Gmünd (DE); OTT, Helmut, 91610 Insingen (DE)
(74) Vertreter: Voith Patent GmbH - Patentabteilung
(86) Internationale Anmeldenummer: PCT/EP2014/070587
(87) Internationale Veröffentlichungsnummer: WO 2015/044326

(56) Entgegenhaltungen:
- DE-A1- 10 150 681
- DE-A1-102012 004 332
- US-A- 3 103 997

## Beschreibung

Die Erfindung betrifft eine hydrodynamische Maschine, insbesondere einen hydrodynamischen Retarder, zur Erzeugung eines Bremsmomentes mittels eines Fluides.

Hydrodynamische Maschinen oder auch hydrodynamischer Retarder, umfassen allgemein ein Gehäuse, in dem ein erstes Schaufelrad, insbesondere Rotor, und ein hierzu konzentrisch angeordnetes zweites Schaufelrad, insbesondere Stator, die gemeinsam einen torusförmigen Arbeitsraum bilden und die um eine gemeinsame Drehachse gruppiert sind, angeordnet sind.

Retarder oder auch hydrodynamische Bremsen können in einem Antriebsstrang motorseitig bzw. getriebeseitig angeordnet sein. Der Füllungsgrad des Retarders mit einem Arbeitsfluid, zum Beispiel Öl oder auch Wasser mit und ohne Zusätze, bestimmt das "Rotor-Bremsmoment". Beim Betätigen des Retarders wird z. B. Öl in den Arbeitsraum gepumpt. Im Bremsbetrieb beschleunigt der angetriebene Rotor dieses Öl und übergibt es am Außendurchmesser des Arbeitsraums an den Stator. Dort wird das Öl verzögert und gelangt über den Innendurchmesser des Arbeitsraums zurück in den Rotor. Durch die allgemein bekannte Wechselwirkung zwischen Rotor und Stator entsteht das Bremsmoment.

Ein Hydrauliksystem sorgt dafür, dass im Nicht-Bremsbetrieb und/oder im Bremsbetrieb der Arbeitsraum mit dem entsprechenden Arbeitsmediumvolumen versorgt bzw. befüllt wird. Dabei ist es von besonderer Bedeutung, dass die in beiden Betriebsarten entstehende Wärme mittels des Arbeitsmediums aus dem Arbeitsraum abgeführt und einem Kühlkreislauf zur Kühlung in einem Kühler zugeführt wird. Insbesondere im Nicht-Bremsbetrieb ist es erforderlich, ein Mindestvolumen durch den Arbeitsraum zu leiten, um den Retarder auch im Nicht-Bremsbetrieb zu kühlen.

Der Arbeitsraum ist über die Fluidzufuhr sowie die Fluidabfuhr an einen Arbeitsfluidkreislauf angeschlossen, der sich im Wesentlichen aus einem Arbeitsfluidspeicher, einem Kühler, einer Pumpe und mehreren Ventilen zusammensetzt. Eine Steuerungs- und Regelungseinheit ist mit den Komponenten eines Hydrauliksystems derart verbunden, dass das Bremsmoment und/oder der Arbeitsmediumstrom gesteuert bzw. geregelt werden kann.

Ein derartiges Hydrauliksystem ist beispielsweise aus der DE10 2006 030 791 A1 bekannt. In diesem Hydrauliksystem geht es im Wesentlichen darum, das Arbeitsmedium in allen Betriebsweisen durch einen Kühler zu leiten, um eine optimale Temperierung zu erreichen. Wobei das Arbeitsmedium ein Öl ist, welches gleichzeitig zur Getriebeschmierung verwendet wird. Zur Anpassung des Volumenstroms ist vorgesehen, die Pumpe des Hydrauliksystems zu regeln.

Weiterhin wird in der US 3,103,997 ein Hydrauliksystem offenbart, in dem eine Ventil und eine Pumpe vorgesehen sind. Mittels der Pumpe kann Arbeitsmedium, in der Bremsstellung und der Nicht-Bremsstellung des Ventils, in den Arbeitsraum einer hydrodynamischen Maschine gepumpt werden.

Der vorliegenden Erfindung liegt die Aufgabe zugrunde, ein verbessertes Hydrauliksystem für eine hydrodynamische Maschine vorzuschlagen. Insbesondere mit dem Ziel, das elektrohydraulische System hinsichtlich Anzahl und Komplexität der Komponenten zu verbessern, sowie Störgrößen zu reduzieren.

Die der Erfindung zugrunde liegende Aufgabe wird durch eine, auch die kennzeichnenden Merkmale gemäß Anspruch 1 aufweisende, gattungsgemäße hydrodynamische Maschine gelöst.

Die Erfindung beinhaltet eine hydrodynamische Maschine oder einen Retarder, insbesondere hydrodynamischen Retarder, umfassend ein erstes Schaufelrad, insbesondere Rotor, und ein hierzu konzentrisch angeordnetes zweites Schaufelrad, insbesondere Stator, die gemeinsam einen torusförmigen Arbeitsraum bilden. Des Weiteren umfasst die hydrodynamische Maschine ein elektrohydraulisches System, welches eine Steuerungs- und Regelungseinheit, eine Pumpe, einen Wärmetauscher, einen Arbeitsmediumspeicher, ein Ventil und ein Leitungssystem aufweist, wobei mittels der Pumpe Arbeitsmedium aus dem Arbeitsmediumspeicher in den Arbeitsraum pumpbar ist. Insbesondere kann das Ventil zwischen einer ersten Stellung, der Nicht-Bremsstellung, und einer zweiten Stellung, der Bremsstellung, geschaltet werden, wobei das Leitungssystem derart ausgelegt ist, dass in beiden Stellungen mittels der Pumpe Arbeitsmedium in den Arbeitsraum pumpbar ist.

Durch die Verwendung eines Ventils in Kombination mit einer Pumpe, zur Sicherstellung der Versorgung des Arbeitsraums mit Arbeitsmedium in allen Betriebssituationen, kann die Komplexität des Leitungssystems bzw. Hydrauliksystems reduziert werden. Damit ergeben sich reduzierte hydraulische Widerstände, wie auch Vorteile hinsichtlich Systemsicherheit, Wartung und Wirtschaftlichkeit. Hinsichtlich des Aufbaus des Hydrauliksystems bzw. Leitungssystems werden nachfolgend unterschiedliche Anordnungen der einzelnen Komponenten des Hydrauliksystems bzw. Leitungssystems vorgeschlagen.

In einer ersten Ausführung kann das Ventil auf der Druckseite der Pumpe angeordnet sein. Bei dieser Anordnung wird das Ventil in der Nicht-Bremsstellung wie auch in der Bremsstellung von Arbeitsmedium durchströmt, sobald der Retarder angetrieben wird und die Pumpe eine Pumpwirkung aufbaut.

Durch das nachgeordnete Hydraulik- bzw. Leitungssystem wird sichergestellt, dass im Nicht-Bremsbetriebsstellung kein oder nur ein sehr geringer Arbeitsmediumdruck und im Bremsbetrieb ein hoher Arbeitsmediumdruck aufgebaut wird.

In einer zweiten Ausführung kann das Ventil auf der Saugseite der Pumpe angeordnet sein. Bei dieser Anordnung wird das Ventil nur im Bremsbetrieb von Arbeitsmedium durchströmt.

Bei beiden Anordnungen werden die Antriebsverluste der Pumpe bei der Verwendung einer Gerotor-Pumpe vorteilhaft an das benötigte Arbeitsmediumvolumen bzw. den benötigten Pumpendruck angepasst.

Erfindungsgemäß ist das Leitungssystem in beiden oben beschriebenen Ausführungen derart aufgebaut, dass es ein Betriebsleitungssystem mit einem Druckregelsystem, durch welches Arbeitsmedium im Bremsbetrieb geleitet wird, und ein Bypassleitungssystem, durch welches Arbeitsmedium im Nicht-Bremsbetrieb geleitet wird, umfasst.

Weiterhin kann das Bypassleitungssystem, insbesondere in der ersten Ausführung, eine Bypassleitung, zur Umgehung des Druckregelsystems, und eine Bypassleitung, zur Rückführung von überschüssigem Arbeitsmedium in den Arbeitsmediumspeicher, umfassen.

Alternativ kann das Bypassleitungssystem, insbesondere in der zweiten Ausführung, eine Bypassleitung zur Umgehung des Druckregelsystems und eine Bypassleitung, zur Umgehung des Ventils, umfassen. Das Ventil kann so als 2/2 Ventil ausgeführt werden.

In allen Bypassleitungen kann weiterhin eine Drossel und/oder ein Rückschlagventil vorgesehen sein.

Zur Regelung des Bremsbetriebs kann das Druckregelsystem ein Proportionalventil umfassen. Dieses kann mit einer Bypassleitung auf der Druckseite der Pumpe in hydraulischer Verbindung stehen, sodass in vorteilhafter Weise gewährleistet ist, dass das Proportionalventil in beiden Betriebszuständen mit dem notwendigen Betriebsmedium bzw. Systemdruck versorgt wird.

Zum Schutz des Proportionalventils kann vor dem Proportionalventil weiterhin ein Arbeitsmediumfilter vorgesehen sein. Ist das Proportionalventil in der Bypassleitung angeordnet, muss nur eine geringe Menge Arbeitsmedium gefiltert werden, wodurch sich die Kosten für die Funktion "Filtern" erheblich reduzieren.

Das Druckregelsystem kann weiterhin ein 3/3 oder ein 3/2 Wegeventil zur Druckregelung umfasst.

Weitere Merkmale der erfindungsgemäßen Vorrichtung und weitere Vorteile der Erfindung ergeben sich aus der nachfolgenden Beschreibung bevorzugter Ausführungsbeispiele unter Bezugnahme auf die Zeichnungen.

Nachfolgend wird die Erfindung anhand von Skizzen näher erläutert.

In diesen zeigen:
- Figur 1: einen Retarder im Schnitt
- Figur 2: ein erstes Ausführungsbeispiel für den Aufbau des Hydrauliksystems
- Figur 3: ein zweites Ausführungsbeispiel für den Aufbau des Hydrauliksystems

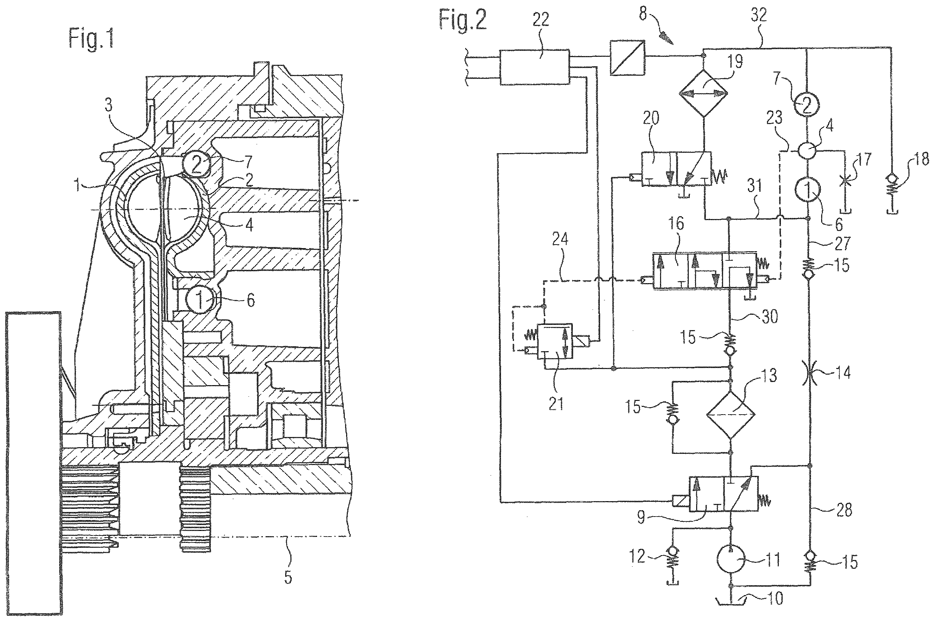

Figur 1 zeigt beispielhaft einen Retarder im Schnitt, welcher insbesondere in Bussen und Nutzfahrzeugen zum Einsatz kommt.

Der Retarder umfasst ein Gehäuse, bestehend aus mehreren Gehäuseteilen, einen Rotor 1 und einen Stator 2, welche miteinander einen torusförmigen Ringraum bzw. Arbeitsraum 4 bilden.

Der Retarder wird mit einem Arbeitsfluid, insbesondere einem Öl betrieben, welches mittels der Pumpe 11 über ein Leitungssystem in den Einlasskanal 6, bzw. Spiralkanal gepumpt wird. Vom Einlasskanal 6 gelangt das Öl durch den Trennspalt 3 in den Arbeitsraum 4. Im Arbeitsraum 4 bildet sich während des Bremsbetriebs eine Kreislaufströmung. Der angetriebene Rotor 1 beschleunigt das Öl und übergibt es am Außendurchmesser in den Stator 2. Dort trifft das Öl auf die ruhenden Statorschaufeln und wird verzögert. Das Öl fließt auf dem Innendurchmesser erneut dem Rotor 2 zu. Die entstehende Bremsenergie wird überwiegend in Wärme umgesetzt, sodass es erforderlich ist, ein Teil des Öl's permanent mittels eines Wärmetauschers 19 zu kühlen. Dieser Anteil des Öls wird über den Fluidauslass bzw. den Auslasskanal 7 aus der Kreislaufströmung abgeleitet. Das abgeleitete Öl wird nachfolgend durch einen Wärmetauscher 19 und anschließend, je nach Betriebszustand, zurück in den Arbeitsraum 4 gepumpt, sodass eine Kreislaufströmung entsteht. Im Nicht-Bremsbetrieb wird das Öl zurück in den Arbeitsmediumspeicher 10 gepumpt.

Figur 2 zeigt ein erstes Ausführungsbeispiel für den Aufbau des Hydrauliksystems. Ein wesentliches Merkmal dieser Ausführung ist die Anordnung der Pumpe 11 vor dem Ventil 9. Das Ventil ist hier in der Nicht-Bremsbetrieb-Stellung dargestellt. Sobald die Pumpe angetrieben wird, wird Öl aus dem Arbeitsmediumspeicher über das Ventil in die Bypassleitungen 27, 28 gepumpt. In der Bypassleitung 27 ist eine Drossel 14 eingebaut, die derart eingestellt werden kann, dass ein kleiner Teil des Arbeitsmediums in den Arbeitsraum 4 gepumpt wird. Der Volumenstrom ist so groß zu wählen, dass eine ausreichende Wärmeabfuhr aus dem Arbeitsraum gewährleistet ist. Weiterhin darf er nicht so groß sein, dass ein erhöhter Leerlaufwiderstand erzeugt wird. Aus dem Arbeitsraum 4 wird das Öl durch den Wärmetauscher 19 zurück in den Arbeitsmediumspeicher 10 gepumpt. Somit wird im Nicht-Bremsbetrieb ständig eine kleine Menge Öl mittels des Wärmetauschers 19 gekühlt.

Die zweite Bypassleitung 28 leitet den restlichen, wesentlich größeren, Volumenstrom direkt zurück in den Arbeitsmediumspeicher 10. Die Pumpe 11 läuft somit nahezu im Leerlaufbetrieb, wodurch die Verluste im Nicht-Bremsbetrieb minimiert werden können, ohne die Pumpe regeln zu müssen. Als Pumpe kann hier eine Gerotor-Pumpe eingesetzt werden, die direkt von der Rotorwelle angetrieben wird.

Für den Bremsbetrieb, Stellung nicht dargestellt, werden die Ventile 9, 16 und 20 geschaltet. Sobald das auf der Druckseite der Pumpe 11 angeordnete Schaltventil 9 schaltet, gelangt Arbeitsmedium über die Arbeitsleitungen 30, 31 und Ventil 16 in den Arbeitsraum 4.

Ventil 16 ist eine Druckwaage, die über den im Arbeitsraum 4 gemessenen Druck und dem von dem Proportionalventil 21 vorgegebenen Druck, in die entsprechende Schaltposition geschaltet wird. Eine Druckwaage ist ein Differenzdruckventil oder Druckregelventil, das einen Differenzdruck zwischen einer extern zugeführten Messstelle und einem am Ventil anliegenden Druck regeln kann. Ventil 16 kann als 3/3 Wegeventil wie hier dargestellt oder aber auch als 2/3 Wegeventil ausgeführt sein. Mittels der Druckwaage kann der Systemdruck im Arbeitsraum 4 proportional zum gewünschten Bremsmoment an der Rotorwelle geregelt werden. Dazu kann ein Drehmomentsensor z. B. an der Rotorwelle vorgesehen sein. Das Proportionalventil 21 wird bei dieser Schaltung erst dann mit Systemdruck versorgt, wenn in Bremsstellung geschaltet wird. Zum Schutz des Proportionalventils 21 ist ein Filter 13 vorgesehen, der das gesamte für den Bremsbetrieb notwendige Arbeitsmedium filtert.

Durch die Schaltung des Ventils 20 wird ein geschlossener Kreislauf zwischen Arbeitsraum 4 und Kühler 19 gebildet, wobei der Systemdruck über die Regelung der Druckwaage geregelt wird.

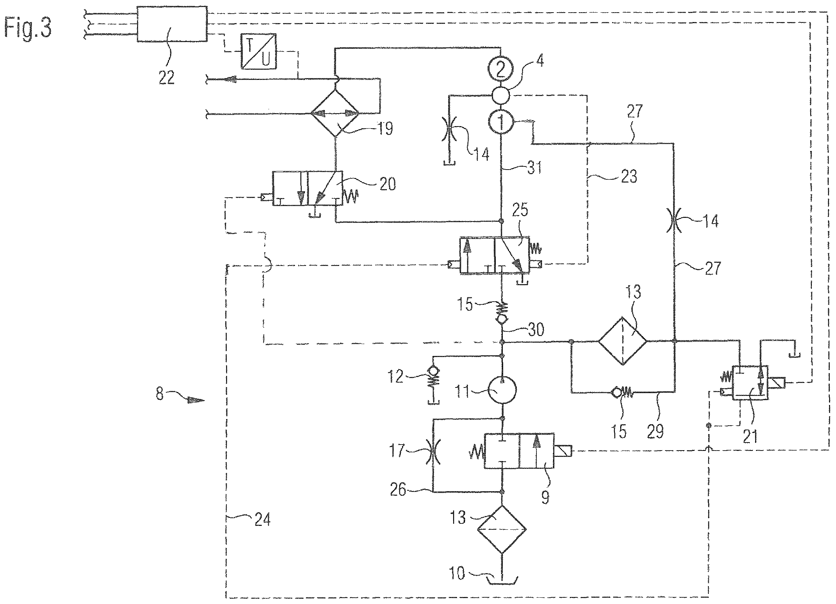

Figur 3 zeigt ein zweites Ausführungsbeispiel für den Aufbau des Hydrauliksystems. Dieses unterscheidet sich wesentlich von der ersten Ausführung, wobei auch in dieser Ausführung im Nicht-Bremsbetrieb ein gewisses Volumen Arbeitsmedium mittels der Pumpe 11 in den Arbeitsraum 4 gepumpt wird. Bei diesem Aufbau ist das Ventil 9 auf der Saugseite der Pumpe 11 angeordnet.

Im Nicht-Bremsbetrieb wird ständig Arbeitsmedium von der Pumpe 11 über die, mittels einer Saugdrossel 17 gedrosselte, Bypassleitung 26 aus dem Arbeitsmediumspeicher 10 angesaugt und über den Bypass 27 in den Arbeitsraum 4 gepumpt. Dabei endet die Bypassleitung 27 derart im Einlasskanal 6, dass das Arbeitsmedium im Wesentlichen durch den Arbeitsraum 4 in den Auslasskanal 7 gepumpt wird. Im Bypass 27 ist eine weitere Drossel 14 installiert und vor dieser ist ein Proportionalventil 21 zur Regelung der Druckwaage, mit dem Ventil 25, an die Bypassleitung 27 angeschlossen. So wird sichergestellt, dass immer ein ausreichender Systemdruck am Proportionalventil 21 anliegt und so eine schnelle, verzögerungsfreie Regelung der Bremswirkung ermöglicht wird. Weiterhin ist ein Filter 13, insbesondere Feinfilter, in der Bypassleitung 27 vor dem Proportionalventil 21 installiert, dadurch wird nur das für den Nicht-Bremsbetrieb und für die Ansteuerung des Proportionalventils 21 notwendige relativ kleine Volumen gefiltert.

Für den Bremsbetrieb, Stellung nicht dargestellt, werden die Ventile 9, 20 und 25 geschaltet. Das Öl gelangt über die Arbeitsleitungen 30, 31 und Ventil 25 in den Arbeitsraum 4. Ventil 25 ist eine Druckwaage, die entsprechend dem im Arbeitsraum 4 gemessenen Druck und dem von dem Proportionalventil 21 vorgegebenen Druck in die entsprechende Schaltposition geschaltet wird. Ventil 25 kann als 2/3 Wegeventil wie hier dargestellt oder aber auch als 3/3 Wegeventil ausgeführt sein. Mittels der Druckwaage kann der Systemdruck im Arbeitsraum 4 proportional zum gewünschten Bremsmoment an der Rotorwelle geregelt werden. Dazu kann ein Drehmomentsensor z. B. an der Rotorwelle vorgesehen sein.

Als Pumpe ist eine Gerotor-Pumpe 11 vorgesehen, die mit der Rotorwelle drehfest verbunden ist. In beiden Ausführungsbeispielen ist gewährleistet, dass der Pumpenwiderstand im Nicht-Bremsbetrieb sehr gering ist und im Bremsbetrieb bremsunterstützend wirkt.

Allgemein sei noch erwähnt, dass die in den Figuren gezeigten Filter und Rückflussleitungen in den Arbeitsmediumspeicher 10 und die in den Leitungen installierten Drosseln bzw. Rückschlagventile für die Gesamtfunktion zwar notwendig sind, aber vom Fachmann routinemäßig eingesetzt werden.

### Bezugszeichenliste

- 1: Rotor
- 2: Stator
- 3: Trennspalt
- 4: Arbeitsraum
- 5: Drehachse
- 6: Einlasskanal
- 7: Auslasskanal
- 8: elektrohydraulisches System
- 9: Ventil
- 10: Arbeitsmediumspeicher
- 11: Pumpe
- 12: Überdruckventil
- 13a/b: Ölsieb / Filter
- 14: Drossel
- 15: Rückschlagventil
- 16: Druckdifferenzventil 3/3 Wegeventil
- 17: Saugdrossel
- 18: Überdruckventil
- 19: Wärmetauscher
- 20: Schaltventil
- 21: Proportionalventl
- 22: Steuerungs- und Regeleinheit
- 23: Steuerleitung
- 24: Steuerleitung
- 25: Druckdifferenzventil
- 26 - 29: Bassleitung
- 30 - 31: Arbeitsleitung
- 32: Leitung zum Kühler

## Patentansprüche

1. Hydrodynamische Maschine, insbesondere hydrodynamischer Retarder, umfassend ein erstes Schaufelrad, insbesondere Rotor (1), und ein hierzu konzentrisch angeordnetes zweites Schaufelrad, insbesondere Stator (2), die gemeinsam einen torusförmigen Arbeitsraum (4) bilden, mit einem elektrohydraulischen System, welches eine Steuerungs- und Regelungseinheit (22), eine Pumpe (11), einen Wärmetauscher (19), ein Arbeitsmediumspeicher (10), ein Ventil (9) und ein Leitungssystem aufweist, wobei mittels der Pumpe (11) Arbeitsmedium aus dem Arbeitsmediumspeicher (10) durch das Leitungssystem in den Arbeitsraum (4) pumpbar ist, wobei das Ventil (9) zwischen einer ersten Stellung, der Nicht-Bremsstellung, und einer zweiten Stellung, der Bremsstellung, geschaltet werden kann, und das Leitungssystem derart ausgelegt ist, dass in beiden Stellungen mittels der Pumpe (11) Arbeitsmedium in den Arbeitsraum (4) pumpbar ist,
**dadurch gekennzeichnet,**
**dass** das Leitungssystem ein Betriebsleitungssystem (30, 31) mit einem Druckregelsystem (16, 20, 21, 25), durch welches Arbeitsmedium im Bremsbetrieb geleitet wird, und ein Bypassleitungssystem (26, 27, 28, 29), durch welches Arbeitsmedium im Nicht-Bremsbetrieb geleitet wird, umfasst.

2. Hydrodynamische Maschine nach Anspruch 1,
**dadurch gekennzeichnet,**
**dass** das Ventil (9) auf der Druckseite der Pumpe (11) angeordnet ist.

3. Hydrodynamische Maschine nach Anspruch 1,
**dadurch gekennzeichnet,**
**dass** das Ventil (9) auf der Saugseite der Pumpe (11) angeordnet ist.

4. Hydrodynamische Maschine nach Anspruch 2,
**dadurch gekennzeichnet,**
**dass** das Bypassleitungssystem eine Bypassleitung (27), zur Umgehung des Druckregelsystems (16, 20, 21, 25), und eine Bypassleitung (28), zur Rückführung von überschüssigem Arbeitsmedium in den Arbeitsmediumspeicher (10), umfasst.

5. Hydrodynamische Maschine nach Anspruch 3,
**dadurch gekennzeichnet,**
**dass** das Bypassleitungssystem eine Bypassleitung (27) zur Umgehung des Druckregelsystems (16, 20, 21, 25) und eine Bypassleitung (26), zur Umgehung des Ventils (9), umfasst.

6. Hydrodynamische Maschine nach Anspruch 5,
**dadurch gekennzeichnet,**
**dass** das Druckregelsystem ein Proportionalventil (21) umfasst, welches mit der Bypassleitung (27) in hydraulischer Verbindung steht.

7. Hydrodynamische Maschine nach Anspruch 6,
**dadurch gekennzeichnet,**
**dass** in der Bypassleitung (27) vor dem Proportionalventil (21) ein Arbeitsmediumfilter (13) vorgesehen ist.

8. Hydrodynamische Maschine nach Anspruch 1 bis 5,
**dadurch gekennzeichnet,**
**dass** in zumindest einer der Bypassleitungen (26, 27) ein Volumendrosselungselement (14, 17) vorgesehen ist.

9. Hydrodynamische Maschine nach Anspruch 7 oder 8,
**dadurch gekennzeichnet,**
**dass** das Druckregelsystem ein 3/3 oder ein 3/2 Wegeventil (16, 25) zur Druckregelung umfasst.

10. Hydrodynamische Maschine nach einem der vorangegangenen Ansprüche, **dadurch gekennzeichnet,**
**dass** der Arbeitsraum (4) über einen Auslasskanal (32) mit einem Kühler (19) verbunden ist.

11. Hydrodynamische Maschine nach Anspruch 1,
**dadurch gekennzeichnet,**
**dass** die Pumpe (11) mit dem Rotor (1) drehfest gekoppelt ist.

12. Hydrodynamische Maschine nach Anspruch 1,
**dadurch gekennzeichnet,**
**dass** die Pumpe (11) eine Gerotor/Zahnring-Pumpe ist.

## Claims

1. Hydrodynamic machine, in particular a hydrodynamic retarder, comprising a first vane wheel, in particular a rotor (1), and a second vane wheel, in particular a stator (2), which is disposed so as to be concentric with said rotor (1), said rotor (1) and said stator (2) conjointly forming a toroidal working chamber (4), having an electrohydraulic system, which has an open-loop and closed-loop control unit (22), a pump (11), a heat exchanger (19), an operating medium reservoir (10), a valve (9), and a line system, wherein operating medium from the operating medium reservoir (10) by means of the pump (11) is able to be pumped through the line system into the working chamber (4), wherein
the valve (9) can be switched between a first position, the non-braking position, and a second position, the braking position, and the line system is conceived in such a manner that operating medium (4) by means of the pump (11) is able to be pumped into the working chamber (4) in both positions,
**characterized in that**
the line system comprises an operating line system (30, 31) having a pressure control system (16, 20, 21, 25) through which operating medium is directed in the braking operation, and a bypass line system (26, 27, 28, 29) through which operating medium is directed in the non-braking operation.

2. Hydrodynamic machine according to Claim 1, **characterized in that**
the valve (9) is disposed on the pressure side of the pump (11).

3. Hydrodynamic machine according to Claim 1, **characterized in that**
the valve (9) is disposed on the suction side of the pump (11) .

4. Hydrodynamic machine according to Claim 2, **characterized in that**
the bypass line system comprises a bypass line (27) for bypassing the pressure control system (16, 20, 21, 25) and a bypass line (28) for returning excess operating medium to the operating medium reservoir (10).

5. Hydrodynamic machine according to Claim 3, **characterized in that**
the bypass line system comprises a bypass line (27) for bypassing the pressure control system (16, 20, 21, 25) and a bypass line (26) for bypassing the valve (9).

6. Hydrodynamic machine according to Claim 5, **characterized in that**
the pressure control system comprises a proportional valve (21) which is hydraulically connected to the bypass line (27).

7. Hydrodynamic machine according to Claim 6, **characterized in that**
an operating medium filter (13) is provided ahead of the proportional valve (21) in the bypass line (27).

8. Hydrodynamic machine according to Claims 1 to 5, **characterized in that**
a volume restriction element (14, 17) is provided in at least one of the bypass lines (26, 27).

9. Hydrodynamic machine according to Claim 7 or 8, **characterized in that**
the pressure control system for controlling the pressure comprises a 3/3-way valve or a 3/2-way valve (16, 25).

10. Hydrodynamic machine according to one of the preceding claims,
**characterized in that**
the working chamber (4) is connected to a cooler (19) by way of an outlet duct (32).

11. Hydrodynamic machine according to Claim 1, **characterized in that**
the pump (11) is coupled to the rotor (1) in a rotationally fixed manner.

12. Hydrodynamic machine according to Claim 1, **characterized in that**
the pump (11) is a gerotor/annular gear pump.

## Revendications

1. Machine hydrodynamique, notamment retardateur hydrodynamique, comprenant une première roue à aubes, notamment un rotor (1), et une deuxième roue à aubes disposée concentriquement par rapport à elle, notamment un stator (2), qui forment ensemble une chambre de travail en forme de tore (4), avec un système électrohydraulique comportant une unité de commande et de régulation (22), une pompe (11), un échangeur thermique (19), un accumulateur d'agent actif (10), une soupape (9) et un système de canalisations, l'agent actif pouvant être pompé hors de l'accumulateur d'agent actif (10) jusque dans la chambre de travail (4) à travers le système de canalisations à l'aide de la pompe (11), la soupape (9) pouvant être commutée entre une première position, la position de non-freinage, et une deuxième position, la position de freinage, et le système de canalisations étant conçu de telle sorte que l'agent actif puisse être pompé dans les deux positions jusque dans la chambre de travail (4) à l'aide de la pompe (11) ;
**caractérisée en ce que** :
le système de canalisations comprend un système de conduites d'exploitation (30, 31) avec un système de régulation de pression (16, 20, 21, 25) à travers lequel l'agent actif circule en mode de freinage et un système de canalisations en dérivation (26, 27, 28, 29) à travers lequel l'agent actif circule en mode de non-freinage.

2. Machine hydrodynamique selon la revendication 1, **caractérisée en ce que** la soupape (9) est disposée sur le côté de pression de la pompe (11).

3. Machine hydrodynamique selon la revendication 1, **caractérisée en ce que** la soupape (9) est disposée sur le côté d'aspiration de la pompe (11).

4. Machine hydrodynamique selon la revendication 2, **caractérisée en ce que** le système de canalisations en dérivation comprend une conduite de dérivation (27) pour contourner le système de régulation de pression (16, 20, 21, 25) et une conduite de dérivation (28), pour ramener l'agent actif en excédent dans l'accumulateur d'agent actif (10).

5. Machine hydrodynamique selon la revendication 3, **caractérisée en ce que** le système de canalisations en dérivation comprend une conduite de dérivation (27) pour contourner le système de régulation de pression (16, 20, 21, 25) et une conduite de dérivation (26), pour contourner la soupape (9).

6. Machine hydrodynamique selon la revendication 5, **caractérisée en ce que** le système de régulation de pression comprend une soupape proportionnelle (21) placée en liaison hydraulique avec la conduite de dérivation (27).

7. Machine hydrodynamique selon la revendication 6, **caractérisée en ce qu'**un filtre d'agent actif (13) est prévu dans la conduite de dérivation (27), devant la soupape proportionnelle (21).

8. Machine hydrodynamique selon les revendications 1 à 5, **caractérisée en ce qu'**un élément d'étranglement de volume (14, 17) est prévu dans au moins une des conduites de dérivation (26, 27).

9. Machine hydrodynamique selon la revendication 7 ou 8, **caractérisée en ce que** le système de régulation de pression comprend une soupape à 3/3 ou 3/2 voies (16, 25) pour la régulation de la pression.

10. Machine hydrodynamique selon l'une quelconque des revendications précédentes, **caractérisée en ce que** la chambre de travail (4) est reliée à un système de refroidissement (19) par le biais d'un canal de sortie (32) .

11. Machine hydrodynamique selon la revendication 1, **caractérisée en ce que** la pompe (11) est couplée fixement en rotation au rotor (1).

12. Machine hydrodynamique selon la revendication 1, **caractérisée en ce que** la pompe (11) est une pompe à couronne dentée/Gerotor.
